# EUROPEAN PATENT APPLICATION

(11) **EP 4 503 057 A1**
(43) Date of publication of application: **05.02.2025**
(21) Application number: 22935257.0
(22) Date of filing: 30.03.2022
(51) Int. Cl.: H01B 1/06

(54) **SOLID ELECTROLYTE, METHOD FOR MANUFACTURING SOLID ELECTROLYTE, AND BATTERY**

(71) Applicant: NGK Insulators, Ltd., Nagoya city, Aichi 467-8530 (JP); Nagoya Institute Of Technology, Nagoya-shi, Aichi 466-8555 (JP)
(72) Inventor: YAGI, En, Nagoya-city, Aichi 467-8530 (JP); YOSHIDA, Toshihiro, Nagoya-city, Aichi 467-8530 (JP); KOBAYASHI, Yoshimasa, Nagoya-city, Aichi 467-8530 (JP); KATSUDA, Yuji, Nagoya-city, Aichi 467-8530 (JP); MIYAZAKI, Reona, Nagoya-Shi, Aichi 466-8555 (JP)
(74) Representative: Mewburn Ellis LLP
(86) International application number: PCT/JP2022/015993
(87) International publication number: WO 2023/188111

(57) **Abstract**

A solid electrolyte contains Li, M, Si, and F, where M is an element serving as a cation. It is preferable that M may be an element serving as a trivalent cation and that the solid electrolyte may contain a component expressed by a composition formula of LiₐM_{b}Si_{c}F_{d}, the composition formula satisfying 0.9(3-x) ≤ a ≤ 1.1(3-x), 0.9(1-x) ≤ b ≤ 1.1(1-x), 0.9x ≤ c ≤ 1.1x, 5.4 ≤ d ≤ 6.6, and 0 < x < 1.

## Description

### TECHNICAL FIELD

The present invention relates to a solid electrolyte and a battery.

### BACKGROUND ART

With the development of portable equipment such as personal computers and mobile phones in recent years, demand is significantly increasing for batteries serving as power sources of such portable equipment. The batteries utilized for such purposes conventionally use, as a medium for ion migration, an organic electrolyte solution that contains an electrolyte dissolved in an organic solvent. The batteries containing such an organic electrolyte solution may cause safety concerns.

In order to resolve the concerns, all solid-state batteries that use solid electrolytes instead of organic electrolyte solutions are under development to ensure intrinsic safety. Since the solid electrolytes are generally non-combustible, it is possible to realize lithium (Li) ion batteries with a high degree of safety.

Among the solid electrolytes, those such as sulfide-based solid electrolytes are widely known, which are made of materials that react with moisture to generate hydrogen sulfide gas. Meanwhile, oxide-based solid electrolytes that do not generate gas such as hydrogen sulfide gas are also being developed widely, but materials for the oxide-based solid electrolytes have lower lithium ion conductivity than materials for the sulfide-based solid electrolytes and therefore it is difficult to improve battery output (draw a large current). In view of this, "Unlocking the Potential of Fluoride-Based Solid Electrolytes for Solid-State Lithium Batteries" by Max Feinauer and other three members, ACS Appl. Energy Mater., 2019, volume 2, pp. 7196-7203 (Document 1) discloses improving lithium ion conductivity by adding Al₂O₃ to Li₃AlF₆ (see Table S1 in Document 1).

However, the lithium ion conductivity of the solid electrolyte according to Document 1 at 100°C is 1.8 × 10⁻⁵ S/cm at the maximum and not enough.

### SUMMARY OF THE INVENTION

The present invention is intended for a solid electrolyte, and it is an object of the present invention to provide a solid electrolyte having high lithium ion conductivity.

A solid electrolyte according to one preferable embodiment of the present invention includes Li, M, Si, and F, and M is an element serving as a cation.

According to the present invention, it is possible to provide a solid electrolyte having high lithium ion conductivity.

Preferably, M may be an element serving as a trivalent cation.

Preferably, M may be an aluminum element.

Preferably, M may be an element serving as a trivalent cation, and the solid electrolyte may contain a component expressed by a composition formula of LiₐM_{b}Si_{c}F_{d}, the composition formula satisfying 0.9(3-x) ≤ a ≤ 1.1(3-x), 0.9(1-x) ≤ b ≤ 1.1(1-x), 0.9x ≤ c ≤ 1.1x, 5.4 ≤ d ≤ 6.6, and 0 < x < 1.

Preferably, M may be an element serving as a tetravalent cation other than Si. The solid electrolyte may contain a component expressed by a composition formula of LiₐM_{b}Si_{c}F_{d}, the composition formula satisfying 1.8 ≤ a ≤ 2.2, 0.9(1-x) ≤ b ≤ 1.1(1-x), 0.9x ≤ c ≤ 1.1x, 5.4 ≤ d ≤ 6.6, and 0 < x < 1.

Preferably, the composition formula may satisfy 0.05 ≤ x ≤ 0.6.

Preferably, an X-ray diffraction pattern obtained by an X-ray diffraction measurement for the solid electrolyte using a CuKα ray may have a peak in both of a range of a diffraction angle 2θ from 19° to 23° and a range of the diffraction angle 2θ from 40° to 44°.

Preferably, in an X-ray diffraction pattern obtained by an X-ray diffraction measurement for the solid electrolyte using a CuKα ray, a half-value width of a peak of maximum intensity may be greater than or equal to 0.4°.

The present invention is also intended for a method of producing a solid electrolyte. A method of producing a solid electrolyte according to one preferable embodiment of the present invention includes a) obtaining a mixture of Li₂SiF₆ and a compound composed of Li, M, and F or a mixture of LiF, Li₂SiF₆, and a compound composed of M and F, where M is an element serving as a cation, and b) subjecting the mixture to a mechanical milling process.

Preferably, M may be an element serving as a trivalent cation, and the compound composed of Li, M, and F may Li₃MF₆, or the compound composed of M and F may be MF₃.

Preferably, M may be an element serving as a tetravalent cation other than Si, and the compound composed of Li, M, and F may be Li₂MF₆, or the compound composed of M and F may be MF₄.

The present invention is also intended for a battery. A battery according to one preferable embodiment of the present invention includes a positive electrode, a negative electrode, and an electrolyte layer provided between the positive electrode and the negative electrode. At least one of the positive electrode, the negative electrode, and the electrolyte layer contains the solid electrolyte described above.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a longitudinal sectional view of an all solid-state secondary battery.
Fig. 2 is a flowchart for the production of a solid electrolyte.
Fig. 3 shows an X-ray diffraction pattern obtained from the solid electrolyte.
Fig. 4 shows a relationship between lithium ion conductivity and the composition of the solid electrolyte.

### DESCRIPTION OF EMBODIMENTS

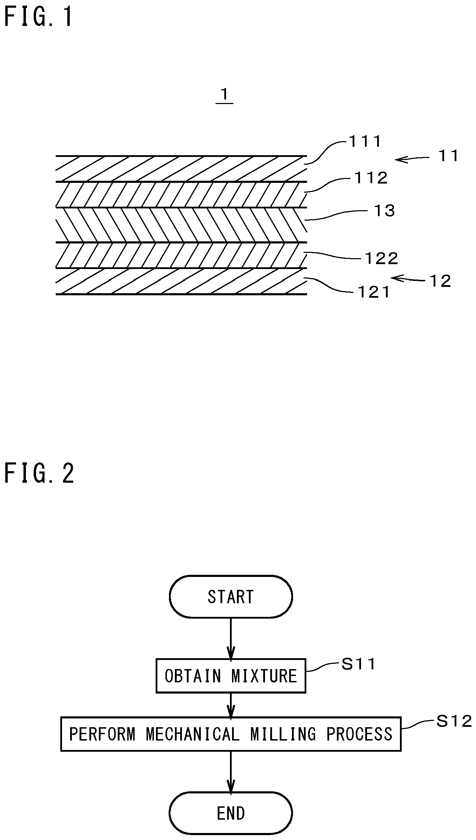

Fig. 1 is a longitudinal sectional view of an all solid-state lithium-ion secondary battery 1 (hereinafter, simply referred to as the "all solid-state secondary battery 1"). The all solid-state secondary battery 1 includes a positive electrode 11, an electrolyte layer 13, and a negative electrode 12 in order from above in Fig. 1. That is, the electrolyte layer 13 is provided between the positive electrode 11 and the negative electrode 12. The electrolyte layer 13 is a solid electrolyte layer and serves also as a separator layer. The positive electrode 11 includes a current collector 111 and a positive electrode layer 112. The positive electrode layer 112 includes a positive active material. The negative electrode 12 includes a current collector 121 and a negative electrode layer 122. The negative electrode layer 122 includes a negative active material.

Preferably, the positive active material of the positive electrode layer 112 may contain a lithium complex oxide. A preferable positive active material may be a lithium complex oxide having a layered rock-salt structure and may, for example, be NCM (Li(Ni, Co, Mn)O₂). The positive active material may also be any other lithium complex oxide and may, for example, be NCA (Li(Ni, Co, Al)O₂) or LCO (LiCoO₂) having a layered rock-salt structure, LNMO (LiNi_{0.5}Mn_{1.5}O₄) having a spinel structure, or LFP (LiFePO₄) having an olivine structure. In addition to the positive active material, the positive electrode layer 112 further includes a solid electrolyte, which will be described later, and an electron conductive agent (e.g., carbon black). The positive electrode layer 112 according to the present embodiment is obtained by integrating these substances by pressurization or heating.

Examples of the negative active material of the negative electrode layer 122 include compounds such as LTO (Li₄Ti₅O₁₂), NTO (Nb₂TiO₇), titanium oxide (TiO₂), graphite, and silicon monoxide (SiO). In addition to the negative active material, the negative electrode layer 122 includes a solid electrolyte, which will be described later. The negative electrode layer 122 may further include an electron conductive agent (e.g., carbon black). The negative electrode layer 122 according to the present embodiment is obtained by integrating these substances by pressurization or heating.

The configurations and materials of the positive electrode 11 and the negative electrode 12 of the all solid-state secondary battery 1 are not limited to the examples described above, and may be any of various configurations and materials.

The electrolyte layer 13 may be composed of a solid electrolyte according to the present invention (hereinafter, also referred to as the "present solid electrolyte"), or may contain the present solid electrolyte. The present solid electrolyte is a lithium (Li) ion conductive material. The solid electrolyte contains a lithium element (Li), an element (M) serving as a cation, a silicon element (Si), and a fluorine element (F). Typically, M is a metallic element. As will be described later, the solid electrolyte achieves high lithium ion conductivity. The solid electrolyte is also incombustible and chemically stable and does not generate hydrogen sulfide gas. Thus, it is possible to provide the all solid-state secondary battery 1 with intrinsic safety.

For example, the present solid electrolyte may be obtained by mixing Li₂SiF₆ and a compound that contains Li, M, and F. In one example, M is an element serving as a trivalent cation, and the present solid electrolyte is obtained by mixing Li₃MF₆ and Li₂SiF₆. In the case where Li₃MF₆ and Li₂SiF₆ are mixed such that the ratio of Li₃MF₆ and Li₂SiF₆ , i.e., the ratio of the amounts of substances becomes (1-x):x where 0 < x < 1, the present solid electrolyte is expressed by a composition formula of Li₃₋ₓM₁₋ₓSiₓF₆. With consideration given to factors such as measurement errors, a component that contains Li, M, Si, and F and whose ratio of the amounts of substances, i.e., whose ratio a:b:c:d, satisfies 0.9 (3-x) ≤ a ≤ 1.1 (3-x), 0.9 (1-x) ≤ b ≤ 1.1 (1-x), 0.9x ≤ c ≤ 1.1x, and 5.4 ≤ d ≤ 6.6 can be regarded as the component expressed by the above composition formula. The above composition formula may preferably satisfy 0.05 ≤ x ≤ 0.8 and more preferably satisfy 0.05 ≤ x ≤ 0.6. This further improves lithium ion conductivity.

Preferably, M may be an aluminum element (Al), and Li₃MF₆ may be Li₃AlF₆ (hereinafter, also referred to as "LAF"). A solid electrolyte that contains LAF and Li₂SiF₆ (hereinafter, also referred to as "LSF") has higher lithium ion conductivity than a simple substance of LAF. The reason for this is not clear, but one conceivable reason is that Al and Si are mixed together (e.g., Si⁴⁺ is solid-dissolved in Al³⁺) in a crystal structure that contains Li by a mechanical milling process, which will be described later. The same applies to the case where M is an element serving as a trivalent cation other than Al.

As will be described later, it is preferable that an X-ray diffraction pattern obtained by an X-ray diffraction measurement conducted using a CuKα ray on the present solid electrolyte may have a peak in both of a range of a diffraction angle 2θ from 19° to 23° and a range of the diffraction angle 2θ from 40° to 44°. It is also preferable that the half-value width of a peak of maximum intensity in the X-ray diffraction pattern may be greater than or equal to 0.4°. Such a solid electrolyte has adequately low crystallinity and achieves high lithium ion conductivity. Note that the present solid electrolyte may be transformed to an amorphous state.

Fig. 2 is a flowchart for the production of the present solid electrolyte. The following description is given of processing for producing the present solid electrolyte by mixing LAF and LSF. First, LAF powder is prepared. In the preparation of the LAF powder, for example, commercial lithium fluoride (LiF) powder and commercial aluminum fluoride (AlF₃) powder are weighed and mixed together so that the ratio of the amounts of substances becomes 3:1. Then, a resultant mixture is subjected to heat treatment (for example, at 900°C) and thereafter pulverized into small particles to obtain LAF powder. The LAF powder may be generated by any other method.

Also, the LSF powder is prepared. The LSF powder is commercially available. It goes without saying that the LSF powder may be generated by a known method. Then, the LAF powder and the LSF powder are mixed together to obtain a mixture (step S11). In the mixture, the ratio of the amount of the substance LSF to the total of the amounts of the substances LAF and LSF is higher than 0% and lower than 100%. This ratio may preferably be higher than or equal to 5% and lower than or equal to 80% and more preferably be higher than or equal to 5% and lower than or equal to 60%.

Subsequently, the mixture is subjected to a mechanical milling process (step S12). In one example of the mechanical milling process, a planetary ball mill may be used. The planetary ball mill is capable of generating remarkably high impact energy because a stage with a pot placed thereon revolves while the pot rotates on its axis. The mechanical milling process may use any other type of pulverizer. Through the mechanical milling process described above, powder of the present solid electrolyte is obtained for use in the positive electrode layer 112, the negative electrode layer 122, or the electrolyte layer 13. In the present example of processing, the mechanical milling process is conducted at ordinary temperatures, but conditions such as temperature may be appropriately changed.

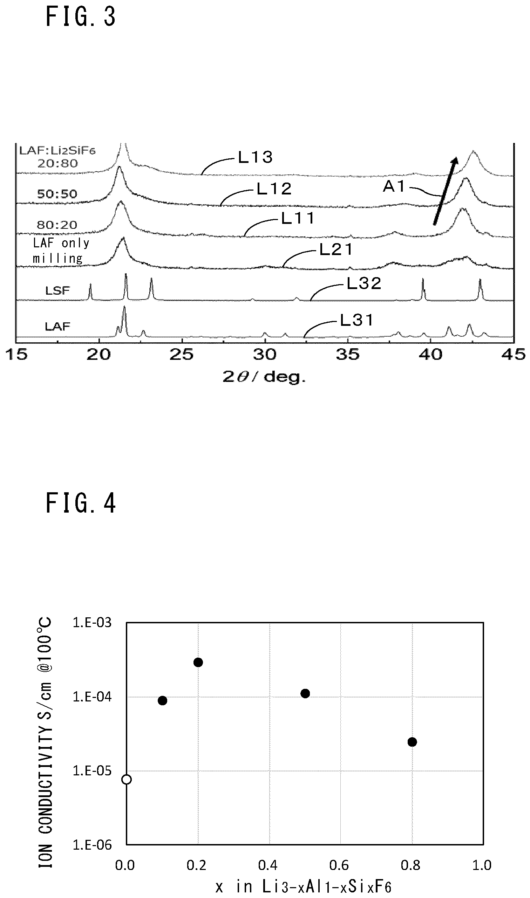

Fig. 3 shows an X-ray diffraction (XRD) pattern obtained by measurement conducted on the present solid electrolyte by a powder X-ray diffraction method. This measurement uses a CuKα ray as a radiation source of an X-ray diffractometer. In Fig. 3, an X-ray diffraction pattern of a solid electrolyte obtained when the ratio of the amount of the substance LSF is 20% (Experiment 3 described later) is denoted by a reference sign L11, an X-ray diffraction pattern of a solid electrolyte obtained when the above ratio is 50% (Experiment 4 described later) is denoted by a reference sign L12, and an X-ray diffraction pattern of a solid electrolyte obtained when the above ratio is 80% (Experiment 5 described later) is denoted by a reference sign L13. Also, an X-ray diffraction pattern of a solid electrolyte according to a comparative example, which is obtained by subjecting only LAF to the mechanical milling process, is denoted by a reference sign L21. Moreover, an X-ray diffraction pattern of the LAF powder that is not subjected to the mechanical milling process is denoted by a reference sign L31, and an X-ray diffraction pattern of the LSF powder that is not subjected to the mechanical milling process is denoted by a reference sign L32. In the X-ray diffraction patterns indicated by lines L11 to L13 and L21, changes in the longitudinal axial direction (intensity) are shown in enlarged dimensions as compared to those in the X-ray diffraction patterns indicated by lines L31 and L32.

As shown in Fig. 3, the X-ray diffraction patterns of the solid electrolytes produced by the mechanical milling process have broad peaks in both of the range of the diffraction angle 2θ from 19° to 23° and the range of the diffraction angle 2θ from 40° to 44°. It can be considered from Fig. 3 that, due to remarkably high impact energy generated by the mechanical milling process, for example, LAF and LSF particles may be pulverized into smaller ones or may be partly transformed to an amorphous state, or crystal structures may become disarranged due to crystal distortion or dislocation. Since such phenomena remarkably occur particularly at interfaces of the particles, the present solid electrolyte is considered to have high lithium ion conductivity. Thus, the present solid electrolyte may be further or completely transformed to an amorphous state. In order to more reliably improve the lithium ion conductivity of the present solid electrolyte, the half-value width of a peak of maximum intensity (e.g., the peak within the range of 19° to 23°) in the X-ray diffraction pattern may be preferably greater than or equal to 0.4° and more preferably greater than or equal to 0.6°. In the X-ray diffraction pattern indicated by the line L11, the half-value width of the peak of maximum intensity is 1.08°. There are no particular limitations on the upper limit for the half-value width, but the upper limit may, for example, be 3.0°. Note that the half-value width of a peak is obtained by fitting an X-ray diffraction pattern with a pseudo-Voigt peak function (Type 1) using data analysis software, Origin Pro 2020b.

As indicated by the arrow denoted by a reference sign A1 in Fig. 3, peaks within the range of 40° to 44° shift to a higher angle as the ratio of the amount of the substance LSF increases. Therefore, it is conceivable in the present solid electrolytes that Si⁴⁺ with an ionic radius of 0.40Å is solid-dissolved in Al³⁺ with an ionic radius of 0.54Å and accordingly unit cells become smaller in the crystal structure of LAF. Note that the present solid electrolyte may be transformed to an amorphous state depending on, for example, the method of producing the solid electrolyte.

Next, experiments conducted on solid electrolytes will be described. The experiments described below were conducted in a dry room or a glove box with a dew point of less than or equal to -40°C.

### Experiment 1

Commercial lithium fluoride (LiF) powder and commercial aluminum fluoride (AlF₃) powder were prepared as raw materials. These raw materials were weighed and mixed together so that the ratio of LiF : AlF₃ (the ratio of the amounts of substances) became 3: 1. A resultant mixture was subjected to heat treatment at 900°C and thereafter pulverized in a mortar to obtain Li₃AlF₆ (i.e., LAF) powder. In this way, solid electrolyte powder that contained only the LAF powder was obtained.

### Experiment 2

In addition to the LAF powder described above, commercial Li₂SiF₆ (i.e., LSF) powder was prepared. These raw materials were weighed so that the ratio of LAF : LSF (the ratio of the amounts of substances) became 90: 10, and were subjected to a mechanical milling process using a planetary ball mill to obtain solid electrolyte powder that contained LAF and LSF.

### Experiment 3

Solid electrolyte powder was obtained by performing the same processing as in Experiment 2, except that LAF and LSF were weighed so as to have a ratio (a ratio of the amounts of substances) of 80:20.

### Experiment 4

Solid electrolyte powder was obtained by performing the same processing as in Experiment 2, except that LAF and LSF were weighed so as to have a ratio (a ratio of the amounts of substances) of 50:50.

### Experiment 5

Solid electrolyte powder was obtained by performing the same processing as in Experiment 2, except that LAF and LSF were weighed so as to have a ratio (a ratio of the amounts of substances) of 20:80.

### Measurement of Lithium Ion Conductivity

The solid electrolyte powder was introduced into a mold that included a sleeve made of resin and upper and lower punches made of stainless steel (SUS), and was subjected to uniaxial press molding by pressurization at 150 MPa. The upper and lower punches were connected to conductors, and impedance measurement was conducted at temperatures ranging from ambient temperature to 100°C to calculate lithium ion conductivity.

Table 1 shows, for each solid electrolyte according to Experiments 1 to 5, the composition formula of the solid electrolyte, lithium ion conductivity at 100°C, and the half-value width of each peak calculated for the XRD pattern by the aforementioned method. The composition formula of Li₃₋ₓAl₁₋ₓSiₓF₆ was for the case where Li₃AlF₆ serving as LAF and Li₂SiF₆ serving as LSF were mixed together so as to have a ratio of the amounts of substances of (1-x):x. Experiments 2 to 5 correspond to examples according to the present invention in which 0 < x < 1 is satisfied, and Experiment 1 corresponds to a comparative example in which x = 0. Fig. 4 shows the relationship between the lithium ion conductivity at 100°C and the value of x in the composition formula of Li₃₋ₓAl₁₋ₓSiₓF₆ (i.e., the ratio of the amount of the substance LSF).

**Table 1**

| | Composition Formula | x | Conductivity at 100°C | Half-Value Width [deg] | |
|---|---|---|---|---|---|
| | | | [S/cm] | 19°-23° | 40°-44° |
| Experiment 1 | Li₃AlF₆ | 0 | 7.6E-06 | - | - |
| Experiment 2 | Li_{2.9}Al_{0.9}Si_{0.1}F₆ | 0.1 | 8.9E-05 | - | - |
| Experiment 3 | Li_{2.8}Al_{0.8}Si_{0.2}F₆ | 0.2 | 2.9E-04 | 0.954 | 1.058 |
| Experiment 4 | Li_{2.5}Al_{0.5}Si_{0.5}F₆ | 0.5 | 1.1E-04 | 0.801 | 0.987 |
| Experiment 5 | Li_{2.2}Al_{0.2}Si_{0.8}F₆ | 0.8 | 2.4E-05 | 0.652 | 0.916 |

The solid electrolyte powder of Experiments 2 to 5 that contained LSF had higher lithium ion conductivity at 100°C than the solid electrolyte powder of Experiment 1 that did not contain LSF. To be more specific, the lithium ion conductivity increased as the ratio of the amount of the substance LSF increased from 0% to 20%. As the ratio of LSF is further increased, lithium ion conductivity decreased. In Experiment 5 in which the ratio of LSF was 80%, lithium ion conductivity was 2.4 × 10⁻⁵ S/cm and higher enough than the lithium ion conductivity of 7.6 × 10⁻⁶ S/cm in Experiment 1 in which LSF was not contained. Thus, it is conceivable that, if the ratio of LSF is higher than 0% and lower than 100% (i.e., 0 < x < 1), it is possible to ensure higher lithium ion conductivity than that of the solid electrolyte powder according to Experiment 1.

According to Experiment 2 in which the ratio of the amount of the substance LSF was 10%, lithium ion conductivity was 8.9× 10⁻⁵ S/cm. Thus, it is conceivable that, if the ratio of LSF is higher than or equal to 5%, lithium ion conductivity becomes high enough. The upper limit for the ratio of LSF may preferably be 80% and more preferably be 60%. In this case, sufficiently high lithium ion conductivity can be achieved with more reliability.

Although Li₃AlF₆ (i.e., LAF) generated from LiF and AlF₃ is mixed with LSF in step S11 in Fig. 2, LiF and AlF₃ may be mixed directly with LSF without generating Li₃AlF₆. Even in this case, it is possible to produce a solid electrolyte having high lithium ion conductivity by subjecting the above mixture to the mechanical milling process in step S12. In step S11, Li₃MF₆ other than Li₃AlF₆ may be mixed with LSF where M is an element serving as a trivalent cation. Examples of Li₃MF₆ include Li₃GaF₆, Li₃CrF₆, and Li₃LaF₆. As another alternative, LiF and MF₃ other than AlF₃ may be mixed directly with LSF. Examples of MF₃ include GaF₃, CrF₃, LaF₃, BiF₃, and YF₃.

In the present solid electrolyte, M may be an element serving as a tetravalent cation other than Si. Such a solid electrolyte can be obtained by, for example, mixing Li₂MF₆ and LSF (i.e., Li₂SiF₆). Even in this case, it is possible to achieve a solid electrolyte having high lithium ion conductivity. In the case where Li₂MF₆ and Li₂SiF₆ are mixed so as to have a ratio of the amounts of substances of (1-x):x (where 0 < x < 1) in step S11 in Fig. 2, the present solid electrolyte can be expressed by a composition formula of Li₂M₁₋ₓSiₓF₆.

With consideration given to factors such as measurement errors, a component that contains Li, M, Si, and F and whose ratio of the amounts of substances, i.e., whose ratio a:b:c:d, satisfies 1.8 ≤ a ≤ 2.2, 0.9(1-x) ≤ b ≤ 1.1(1-x), 0.9x ≤ c ≤ 1.1x, and 5.4 ≤ d ≤ 6.6 can be regarded as a component expressed by the above composition formula. It is preferable that the above composition formula may satisfy 0.05 ≤ x ≤ 0.8 and more preferably satisfy 0.05 ≤ x ≤ 0.6. This further improves lithium ion conductivity. Examples of Li₂MF₆ include Li₂TiF₆, Li₂ZrF₆, and Li₂GeF₆. In step S11, LiF and MF₄ may be mixed directly with Li₂SiF₆ without generating Li₂MF₆. Examples of MF₄ include TiF₄ and ZrF₄.

As described above, the present solid electrolyte contains Li, M, Si, and F, and M is an element serving as a cation. Accordingly, it is possible to provide a solid electrolyte having high lithium ion conductivity.

Preferably, M may be an element serving as a trivalent cation. In this case, it is preferable that the present solid electrolyte may contain a component expressed by a composition formula of LiₐM_{b}Si_{c}F_{d}, the composition formula satisfying 0.9(3-x) ≤ a ≤ 1.1(3-x), 0.9(1-x) ≤ b ≤ 1.1(1-x), 0.9x ≤ c ≤ 1.1x, 5.4 ≤ d ≤ 6.6, and 0 < x < 1. This more reliably achieves high lithium ion conductivity.

Alternatively, M may be an element serving as a tetravalent cation other than Si. In this case, it is preferable that the present solid electrolyte may contain a component expressed by a composition formula of LiₐM_{b}Si_{c}F_{d}, the composition formula satisfying 1.8 ≤ a ≤ 2.2, 0.9(1-x) ≤ b ≤ 1.1(1-x), 0.9x ≤ c ≤ 1. 1x, 5.4 ≤ d ≤ 6.6, and 0 < x < 1. This more reliably achieves high lithium ion conductivity.

In order to identify whether an unknown solid electrolyte is the present solid electrolyte, the unknown solid electrolyte is subjected to chemical analysis to identify whether constituent elements of the unknown solid electrolyte include Li, M, Si, and F. In the identification of whether the unknown solid electrolyte is expressed by the above composition formula, for example, Li, Al, and Si may be quantitated by an ICP emission spectral analyzer, and F may be quantitated by ion chromatography. In the case where the present solid electrolyte contains an element M other than Al, a measurement method capable of quantitating the element M may be appropriately selected.

The method of producing the solid electrolyte includes the step (step S11) of obtaining a mixture by mixing Li₂SiF₆ and a compound composed of Li, M, and F or by mixing LiF, Li₂SiF₆, and a component composed of M and F, where M is an element serving as a cation, and the step (step S12) of subjecting the mixture to a mechanical milling process. Accordingly, it is possible to easily provide a solid electrolyte having high lithium ion conductivity.

Preferably, M may be an element serving as a trivalent cation. In this case, the aforementioned compound composed of Li, M, and F may preferably be Li₃MF₆, or the aforementioned compound composed of M and F may preferably be MF₃. This enables more reliably producing a solid electrolyte having high lithium ion conductivity.

Alternatively, M may be an element serving as a tetravalent cation other than Si. In this case, the aforementioned compound composed of Li, M, and F may preferably be Li₂MF₆, or the aforementioned compound composed of M and F may preferably be MF₄. This enables more reliably producing a solid electrolyte having high lithium ion conductivity.

The present solid electrolyte, the method of producing the solid electrolyte, and a battery may be modified in various ways.

M contained in the present solid electrolyte may be an element other than the element serving as a trivalent cation and the element serving as a tetravalent cation as long as M serves as a cation. The X-ray diffraction pattern obtained from the solid electrolyte may have no peak in the range of the diffraction angle 2θ from 19° to 23° and/or the range of the diffraction angle 2θ from 40° to 44°. Moreover, the half-value width of a peak of maximum intensity in the X-ray diffraction pattern may be less than 0.4°.

The present solid electrolyte may be mixed with a different substance (which may contain Li) and used as an electrolyte material. In this case, it is preferable that the present solid electrolyte may become a component with a highest mass ratio, i.e., a principal component, among the components of the electrolyte material. The mass ratio of the principal component in the electrolyte material may preferably be higher than or equal to 50% by mass, more preferably be higher than or equal to 60% by mass, and yet more preferably be higher than or equal to 70% by mass.

The present solid electrolyte for use in the all solid-state secondary battery 1 does not necessarily have to be contained in all of the positive electrode 11, the negative electrode 12, and the electrolyte layer 13, and may be contained in at least one of the positive electrode 11, the negative electrode 12, and the electrolyte layer 13. The present solid electrolyte may be used in a battery other than the all solid-state secondary battery, and may be used for purposes other than batteries. The production of the present solid electrolyte may be conducted by a process other than the mechanical milling process.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

### REFERENCE SIGNS LIST

- 1: all solid-state lithium-ion secondary battery
- 11: positive electrode
- 12: negative electrode
- 13: electrolyte layer
- S11, S12: step

## Claims

1. A solid electrolyte comprising:
Li, M, Si, and F,
wherein M is an element serving as a cation.

2. The solid electrolyte according to claim 1, wherein
M is an element serving as a trivalent cation.

3. The solid electrolyte according to claim 1 or 2, wherein
M is an aluminum element.

4. The solid electrolyte according to any one of claims 1 to 3, wherein
M is an element serving as a trivalent cation, and
said solid electrolyte contains a component expressed by a composition formula of LiₐM_{b}Si_{c}F_{d},
the composition formula satisfying 0.9(3-x) ≤ a ≤ 1.1(3-x), 0.9(1-x) ≤ b ≤ 1.1(1-x), 0.9x ≤ c ≤ 1.1x, 5.4 ≤ d ≤ 6.6, and 0 < x < 1.

5. The solid electrolyte according to claim 1, wherein
M is an element serving as a tetravalent cation other than Si, and
said solid electrolyte contains a component expressed by a composition formula of LiₐM_{b}Si_{c}F_{d},
the composition formula satisfying 1.8 ≤ a ≤ 2.2, 0.9(1-x) ≤ b ≤ 1.1(1-x), 0.9x ≤ c ≤ 1.1x, 5.4 ≤ d ≤ 6.6, and 0 < x < 1.

6. The solid electrolyte according to claim 4 or 5, wherein
said composition formula satisfies 0.05 ≤ x ≤ 0.6.

7. The solid electrolyte according to any one of claims 1 to 6, wherein
an X-ray diffraction pattern obtained by an X-ray diffraction measurement using a CuKα ray has a peak in both of a range of a diffraction angle 2θ from 19° to 23° and a range of the diffraction angle 2θ from 40° to 44°.

8. The solid electrolyte according to any one of claims 1 to 7, wherein
in an X-ray diffraction pattern obtained by an X-ray diffraction measurement using a CuKα ray, a half-value width of a peak of maximum intensity is greater than or equal to 0.4°.

9. A method of producing a solid electrolyte, comprising:
a) obtaining a mixture of Li₂SiF₆ and a compound composed of Li, M, and F or a mixture of LiF, Li₂SiF₆, and a compound composed of M and F, where M is an element serving as a cation; and
b) subjecting said mixture to a mechanical milling process.

10. The method of producing a solid electrolyte according to claim 9, wherein
M is an element serving as a trivalent cation, and
said compound composed of Li, M, and F is Li₃MF₆, or said compound composed of M and F is MF₃.

11. The method of producing solid electrolyte according to claim 9, wherein
M is an element serving as a tetravalent cation other than Si, and
said compound composed of Li, M, and F is Li₂MF₆, or said compound composed of M and F is MF₄.

12. A battery comprising:
a positive electrode;
a negative electrode; and
an electrolyte layer provided between said positive electrode and said negative electrode,
wherein at least one of said positive electrode, said negative electrode, and said electrolyte layer contains the solid electrolyte according to any one of claims 1 to 8.
